# EUROPÄISCHE PATENTSCHRIFT

(11) **EP 3 036 144 B1**
(45) Veröffentlichungstag und Bekanntmachung des Hinweises auf die Patenterteilung: **14.06.2017**
(21) Anmeldenummer: 14743999.6
(22) Anmeldetag: 26.07.2014
(51) Int. Cl.: B60W 50/04, B60W 30/095, B60W 50/14, B60W 50/00, B60W 30/08, G05D 1/00

(54) **VERFAHREN ZUM BETRIEB EINES KRAFTFAHRZEUGS MIT EINEM SICHERHEITSSYSTEM UND EINEM VOLLAUTOMATISCHEN FAHRERASSISTENZSYSTEM UND KRAFTFAHRZEUG**
METHOD FOR OPERATING A MOTOR VEHICLE HAVING A SAFETY SYSTEM AND A FULLY AUTOMATIC DRIVER ASSISTANCE SYSTEM AND MOTOR VEHICLE
PROCÉDÉ PERMETTANT DE FAIRE FONCTIONNER UN VÉHICULE AUTOMOBILE POURVU D'UN SYSTÈME DE SÉCURITÉ ET D'UN SYSTÈME D'ASSISTANCE AU CONDUCTEUR ENTIÈREMENT AUTOMATIQUE ET VÉHICULE AUTOMOBILE

(30) Priorität: 20.08.2013 DE 102013013865
(43) Veröffentlichungstag der Anmeldung: 29.06.2016
(73) Patentinhaber: Audi AG, 85045 Ingolstadt (DE)
(72) Erfinder: SIEGEL, Andreas, 85049 Ingolstadt (DE); SIEDERSBERGER, Karl-Heinz, 86669 Königsmoos (DE); REICHEL, Michael, 85049 Ingolstadt (DE); LANGE, Alexander, 80538 München (DE)
(74) Vertreter: Herbst, Matthias Heinz
(86) Internationale Anmeldenummer: PCT/EP2014/002046
(87) Internationale Veröffentlichungsnummer: WO 2015/024620

(56) Entgegenhaltungen:
- EP-A1- 2 093 741
- WO-A1-02/08010
- DE-A1-102012 203 187
- US-A1- 2008 040 040
- US-A1- 2010 228 419
- US-B1- 8 473 144

## Beschreibung

Die Erfindung betrifft ein Verfahren zum Betrieb eines Kraftfahrzeugs mit einem Sicherheitssystem und einem zum vollständig automatischen Betrieb des Kraftfahrzeugs ausgebildeten vollautomatischen Fahrerassistenzsystem, wobei das Sicherheitssystem zu einem autonomen Fahreingriff bei Erfüllung wenigstens einer die aktuelle Fahrsituation, beschrieben durch Fahrsituationsdaten, die Prognosedaten über zukünftige Fahrzeugführungsmaßnahmen des Kraftfahrzeugs enthalten, auswertenden Eingriffsbedingung ausgebildet ist. Daneben betrifft die Erfindung ein Kraftfahrzeug. Ein derartiges Verfahren ist aus dem Dokument US 2010/0228419 bekannt. Sicherheitssysteme für Kraftfahrzeuge wurden im Stand der Technik bereits vorgeschlagen, beispielsweise sogenannte integrale Sicherheitssysteme. Derartige Sicherheitssysteme werten die aktuelle Fahrsituation aus, insbesondere im Hinblick auf eine Unfallwahrscheinlichkeit. Wird diese zu hoch und ist angesichts der Fahrsituation des Kraftfahrzeugs auch nicht damit zu rechnen, dass ein Fahrer des Kraftfahrzeugs noch rechtzeitig reagieren kann, greifen derartige Sicherheitssysteme in die Fahrzeugführung ein, um unfallvermeidende und/oder unfallfolgenmindernde Maßnahmen zu realisieren. Ein Beispiel für derartige Sicherheitssysteme sind automatische Notbremssysteme. Diese versuchen, eine Kollision mit einem Objekt oder einem anderen Verkehrsteilnehmer zu verhindern, wenn festgestellt wird, dass ein Ausweichen nicht oder kaum noch möglich sein dürfte und/oder der Fahrer nicht mehr rechtzeitig reagieren könnte. Kennzeichnend für derartige Sicherheitssysteme ist, dass sie dem Fahrer solange wie möglich die Entscheidungsfreiheit, wie er mit der kritischen Situation umgehen möchte, überlassen, mithin erst sehr spät eingreifen, um eine Bevormundung des Fahrers, solange diesem noch Optionen zur Verfügung stehen, zu vermeiden. Beschleunigt beispielsweise ein Fahrer, um ein potentielles Kollisionsobjekt zu überholen bzw. diesem auszuweichen, wäre es kontraproduktiv, einen starken Bremsvorgang durchzuführen. Zusammenfassend wird durch ein Sicherheitssystem, das im Übrigen meist von anderen Fahrzeugsystemen unabhängig ist, kontinuierlich die aktuelle Fahrsituation, die durch entsprechende Fahrsituationsdaten beschrieben ist, ausgewertet, um bei Erfüllung einer Eingriffsbedingung unfallvermeidend und/oder unfallfolgenmindernd zu agieren.

Auch Fahrerassistenzsysteme, die eine teilweise Automatisierung des Betriebs des Kraftfahrzeugs ermöglichen, sind im Stand der Technik bekannt und teilweise bereits serienmäßig erhältlich. Beispiele für derartige Fahrerassistenzsysteme, die einen Teil der Fahraufgabe vom Fahrer übernehmen können, sind Längsführungssysteme, beispielsweise ACC-Systeme (adaptive cruise control), und Querführungssysteme, beispielsweise LKS (Lane-Keeping-Systeme). Der Automatisierungsgrad in Kraftfahrzeugen wird in Zukunft voraussichtlich weiter steigen, nachdem Fahrern eine größere Auswahl an Fahrerassistenzsystemen zur Verfügung stehen. Der Fahrer hat mithin die Wahl, den Anteil an der Fahrzeugführung, der ihm selbst auferlegt ist, auch selbst zu bestimmen. Vorgeschlagen wurden bereits auch zum vollständig automatischen Betrieb des Kraftfahrzeugs ausgebildete Fahrerassistenzsysteme, sogenannte vollautomatische Fahrerassistenzsysteme, die die Fahrzeugführung komplett übernehmen, mithin den Fahrer aus dem Loop entfernen.

Sicherheitssysteme und automatisierende Fahrerassistenzsysteme, insbesondere vollautomatische Fahrerassistenzsysteme, sind bislang meist voneinander unabhängig realisiert. Das bedeutet, Sicherheitssysteme überwachen weitgehend die Fahrtätigkeit des Fahrers und greifen mithin im manuellen Betrieb sinnvoll ein. Würde man ein derartiges Sicherheitssystem auch für den vollautomatischen Betrieb nutzen wollen, würde das Sicherheitssystem von falschen Voraussetzungen ausgehen, nachdem vollautomatische Fahrerassistenzsysteme in ihren Handlungsoptionen gegenüber einem Fahrer meist durch den Funktionsumfang eingeschränkt sind.

Ein weiterer wesentlicher Unterschied zwischen dem vollautomatischen Fahren und dem manuellen Betrieb durch einen Fahrer ist, dass die Analyse der Fahrsituation häufig auch von einer Prognose zukünftiger Fahrzeugführungsmaßnahmen abhängig gemacht wird. So überprüfen beispielsweise Sicherheitssysteme, die zu einer Notbremsung ausgelegt sind, vor einem Fahreingriff meist, ob es Hinweise gibt, dass der Fahrer ein Ausweichmanöver um in Kollisionsobjekt beginnt oder dergleichen. Es wird mithin eine Prognose innerhalb des Sicherheitssystems durchgeführt, wobei die entstehenden Prognosedaten eine Aussage darüber enthalten, wie der Fahrer wahrscheinlich das Kraftfahrzeug weiter führen wird. Mit anderen Worten wird also eine Fahrerintention ermittelt.

Eine derartige Vorgehensweise wäre bei einem vollautomatischen Fahrerassistenzsystem, welches die komplette Fahrzeugführung inne hat, weder sinnvoll noch effektiv, da das vollautomatische Fahrerassistenzsystem üblicherweise genau weiß, welche Fahrzeugführungsmaßnahmen für einen bestimmten Zeitraum in der Zukunft anstehen.

Sollen mithin Rückfallebenen für vollautomatische Fahrerassistenzsysteme geschaffen werden, werden diese in heute bekannten Vorschlägen in das vollautomatische Fahrerassistenzsystem selbst integriert, indem beispielsweise Plausibilisierungsroutinen verwendet werden, um die von dem vollautomatischen Fahrerassistenzsystem getroffenen Entscheidungen zu verifizieren, oder es werden redundante Datenquellen, beispielsweise Sensoren, ausgewertet, um Fehler des vollautomatischen Sicherheitssystems, an das äußerst hohe Anforderungen gestellt werden, weitgehend zu vermeiden. Zur Vermeidung von potentiellen Fahrfehlern und/oder Unfällen bei vollautomatischen Fahrerassistenzsystemen ist also ein erheblicher Aufwand zu treiben. Die Funktionsweise herkömmlicher Sicherheitssysteme ist dagegen auf den manuellen Betrieb abgestellt.

Der Erfindung liegt daher die Aufgabe zugrunde, das Zusammenwirken von Fahrzeugsystemen in einem Kraftfahrzeug zu verbessern.

Zur Lösung dieser Aufgabe ist bei einem Verfahren der eingangs genannten Art erfindungsgemäß vorgesehen, dass die Prognosedaten bei vollautomatischem Betrieb durch das Fahrerassistenzsystem und bei wenigstens teilweise durch einen Fahrer geführten Betrieb durch ein von dem Sicherheitssystem unabhängiges Prognosemodul ermittelt und dem Sicherheitssystem über eine einzige, durch das Fahrerassistenzsystem und das Prognosemodul genutzte Datenschnittstelle übermittelt werden.

Die der Erfindung zugrunde liegende Idee ist es also, die Ermittlung der Prognosedaten aus dem Sicherheitssystem heraus in ein Prognosemodul bzw. das Fahrerassistenzsystem zu verlagern, so dass je nach der aktuellen Verteilung der Fahrzeugführungsaufgaben geeignete Prognosedaten dem Sicherheitssystem zur Verfügung gestellt werden können, wozu eine klar definierte Datenschnittstelle vorgesehen ist, die sowohl das Fahrerassistenzsystem also auch das Prognosemodul, welches bevorzugt in einem anderen Steuergerät als dem Steuergerät des Sicherheitssystems realisiert ist, nutzen können. Es werden also konkret ein Datenformat und ein Eingang für Prognosedaten festgelegt, so dass diese beispielsweise über ein Bussystem des Kraftfahrzeugs an ein Steuergerät des Sicherheitssystems übertragen und dort korrekt verarbeitet werden können. Es wird mithin eine standardisierte Datenschnittstelle, die auch als Fahrerintentions-Schnittstelle bezeichnet werden kann, eingesetzt, die auch bei vollautomatisiertem Betrieb des Kraftfahrzeugs verwendet wird, so dass das vollautomatische Fahrerassistenzsystem dem Sicherheitssystem ebenso mitteilen kann, welche zukünftigen Fahrzeugführungsmaßnahmen anstehen.

Dies ermöglicht es aber, das Sicherheitssystem sowohl für den wenigstens teilweise manuellen Betrieb als auch für den vollautomatischen Betrieb des Kraftfahrzeugs einzusetzen. Beim vollautomatisierten Betrieb des Kraftfahrzeugs kann das Sicherheitssystem mithin analog zur manuellen Fahrt überprüfen, ob das Fahrerassistenzsystem korrekt funktioniert oder ob eine potentielle Gefahr nicht erkannt wurde. Dabei wird explizit der Vorteil genutzt, dass das vollautomatische Fahrerassistenzsystem genau angeben kann, welche Fahrzeugführungsmaßnahmen verwendet werden, das bedeutet, welche Manöver wann durchgeführt werden sollen. Mithin kann immer eine Fahrzeugführungsmaßnahmen-Wahrscheinlichkeit von 100 % erreicht werden. Es kann mithin vorgesehen sein, dass das Fahrerassistenzsystem die Prognosedaten aus seinen für einen vorausliegenden Zeitabschnitt geplanten Fahreingriffen ermittelt.

Wesentlich für die Durchführung der vorliegenden Erfindung ist dabei, dass die Datenschnittstelle klar definiert und standardisiert ist, mithin ein bestimmtes Datenformat der Prognosedaten und einen bestimmten Zugang voraussetzt. Dann wird die vorteilhafte Nutzung des Sicherheitssystems für alle Betriebsarten hinsichtlich der Fahrzeugführung ermöglicht. Welches konkrete Datenformat gewählt wird, ist dabei nicht wesentlich, wobei bevorzugt jedoch eine Zuordnung von Wahrscheinlichkeiten zu bestimmten Fahrzeugführungsmaßnahmen bzw. Klassen von Fahrzeugführungsmaßnahmen vorgesehen ist.

So kann in konkreter Ausgestaltung der vorliegenden Erfindung vorgesehen sein, dass die Prognosedaten wenigstens eine zukünftige, wenigstens einen Trajektorienabschnitt umfassende Trajektorie des Kraftfahrzeugs und/oder wenigstens einen zukünftigen Fahreingriff beschreiben, wobei jedem Trajektorienabschnitt bzw. jedem Fahreingriff ein Wahrscheinlichkeitswert für den Eintritt des Trajektorienabschnitts bzw. des Fahreingriffs zugeordnet ist. Beim vollautomatischen Fahrerassistenzsystem ist bekannt, wie die weitere Planung der Fahrzeugführung aussieht, so dass die Wahrscheinlichkeiten dann mit 100 % angesetzt werden können. Anders ist dies im manuellen Fall.

Hintergrund der Ermittlung von Prognosedaten ist, wie bereits dargelegt wurde, die Intention des Fahrers (oder fahrenden Systems) abzuschätzen. Um möglichst Unfälle und dergleichen vermeiden zu können, sollten potentielle Eingriffe relativ früh erfolgen, beispielsweise aber auch zu einem Zeitpunkt, an dem fahrphysikalisch gesehen noch mehrere Optionen für den Fahrer oder das fahrende System bestehen. Insbesondere im manuellen Fall, um den Fahrer nicht zu bevormunden, muss bei einer potentiellen Kollisionssituation eingeschätzt werden, welche Intention der Fahrer gerade hat, beispielsweise, ob er um ein Hindernis außen herumfahren, davor anhalten möchte oder die Gefahr gar nicht erkannt hat und den Fahrbetrieb unter Missachtung des Hindernisses aufrechterhalten möchte. Im letzteren Fall sollte das Sicherheitssystem eingreifen. Für den vollautomatisierten Betrieb entspricht diese Überprüfung der "Intention" letztlich einer Überprüfung, ob das Fahrerassistenzsystem die Gefahr selbsthin erkannt hat.

Die Prognosedaten beschreiben diese Intention, also zumindest die wahrscheinlichsten zukünftigen Fahrzeugführungsmaßnahmen, durch insbesondere Trajektorienabschnitte und/oder Fahreingriffe. Dabei kann beispielsweise eine Aufteilung in unterschiedliche Klassen erfolgen, wobei folgende verallgemeinerte Intensionen betrachtet werden können:
Querführung: "Fahrstreifen folgen", "Links abbiegen", "Rechts abbiegen", "Fahrstreifen wechseln", "nach links ausweichen", "nach rechts ausweichen".
Längsführung: "Vordermann folgen", "Geschwindigkeit reduzieren", "Geschwindigkeit erhöhen", "Anhalten", "Stehen bleiben".
Gekoppelte Quer- und Längsführungen: "Einparken", "Ausparken", "Abbiegen", "in eine Lücke beim Fahrstreifenwechsel einscheren".

In Worten beschrieben könnte eine Abfolge von prognostizierten Fahrzeugführungsmaßnahmen beispielsweise folgendermaßen aussehen:
A) Fahrstreifen folgen, 100 m, 90 % wahrscheinlich
B) Danach an der Kreuzung rechts abbiegen, 60 % wahrscheinlich
C) Nach A) weiter geradeaus fahren, 20 % wahrscheinlich
D) Nach A) links abbiegen, 20 % wahrscheinlich.

Dem Fachmann ist selbstverständlich klar, dass die konkrete Umsetzung als durch das Sicherheitssystem verarbeitbare Daten auf vielfältige Weise erfolgen kann und nicht in der soeben beispielhaft dargestellten Textform erfolgen muss.

Die Prognosedaten werden, wie bereits dargelegt wurde, von dem Sicherheitssystem im Rahmen der Auswertung von Fahrsituationsdaten genutzt.

Die Fahrsituation wird dabei selbstverständlich durch weitere Fahrsituationsdaten beschrieben, insbesondere den Zustand des Kraftfahrzeugs beschreibende Egodaten, beispielsweise dessen Geschwindigkeit, und die Umgebung des Kraftfahrzeugs beschreibende Umfelddaten, die beispielsweise als ein Umfeldmodell allen Fahrzeugsystemen des Kraftfahrzeugs verfügbar gemacht werden können und die meist auf Daten verschiedener Umfeldsensoren basieren. Mit Hilfe all dieser Fahrsituationsdaten, die dann auch die Prognosedaten, die über Datenschnittstelle erhalten wurden, umfassen, wird mithin wenigstens eine Eingriffsbedingung ausgewertet, beispielsweise eine Unfallwahrscheinlichkeit ermittelt und mit einem Schwellwert verglichen, wobei bei Fahreingriffen nach einem vorgegebenen Aktionsplan und/oder auch unter Berücksichtigung der Fahrsituationsdaten ermittelte Fahreingriffe durchgeführt werden können.

In einer besonders vorteilhaften Ausführungsform der vorliegenden Erfindung kann vorgesehen sein, dass wenigstens ein den Anteil eines menschlichen Fahrers an der Fahrzeugführung beschreibender Automatisierungsgradparameter als Teil der Prognosedaten ermittelt wird. Neben den Intentionen des Fahrers bzw. des Fahrerassistenzsystems ist es für das Sicherheitssystem nützlich zu wissen, welchen Anteil der Fahrzeugführung der Fahrer und welchen Anteil der Fahrzeugführung das Fahrerassistenzsystem (oder ein sonstiges, insbesondere teilautonomes Fahrzeugsystem) trägt. Wie bereits angedeutet, betrachten viele Sicherheitssysteme bei der Auswertung der Fahrsituationsdaten, also der Bewertung der Fahrsituation, verbleibende Optionen, die aber davon abhängig sind, ob ein Fahrzeugsystem oder ein menschlicher Fahrer für die entsprechenden Fahreingriffe zuständig ist. Menschliche Fahrer haben meist einen größeren Handlungsspielraum, der insbesondere bis an den physikalischen Grenzbereich des Kraftfahrzeugs heranreicht, während, beispielsweise aus Sicherheitsgründen, der Handlungsbereich von Fahrzeugsystemen, insbesondere auch des vollautomatischen Fahrerassistenzsystems, häufig eingeschränkt ist, so dass dann, wenn ein Teil der Fahrzeugführung einem Fahrzeugsystem obliegt, die Anzahl verbleibender Optionen gegebenenfalls reduziert ist. So sind beispielsweise Fahrzeugsysteme bekannt, die in ihren Fahreingriffen nur eine begrenzte Fahrdynamik des Kraftfahrzeugs erreichen können, sich mithin beispielsweise für die Längs-und Querbeschleunigung innerhalb bestimmter Grenzen halten müssen. Wurde beispielsweise ein Hindernis erkannt, ist es dann, wenn ein Fahrer noch ausweichen kann, für ein Fahrzeugsystem gegebenfalls schon nicht mehr möglich, das Hindernis zu umfahren. Eingriffsschwellen oder die Bewertung der Fahrsituation an sich können mithin abhängig vom vorliegenden Automatisierungsgrad angepasst werden, insbesondere kann bei höherem Automatisierungsgrad ein früheres Eingreifen realisiert werden. Zusätzlich zu den Informationen über zukünftige Fahrzeugführungsmaßnahmen können mithin weitere für den Betrieb des Sicherheitssystems verwendbare, dessen Nützlichkeit für verschiedene Betriebszustände erweiternde Informationen in Form des Automatisierungsgradparameters erhalten werden. Insbesondere kann das Sicherheitssystem also nicht nur für die beiden Extremzustände, dass der Betrieb des Kraftfahrzeugs von dem Fahrerassistenzsystem allein oder von dem Fahrer allein geführt wird, genutzt werden, sondern für jeden dazwischen denkbaren Automatisierungsgrad.

Automatisierungsgradparameter können leicht aus Informationen verschiedener Fahrzeugsysteme zusammengestellt werden, wobei es, worauf im Folgenden noch eingegangen werden wird, ohnehin zweckmäßig ist, wenn teilautomatische weitere Fahrzeugsysteme wie beispielsweise ACC-Systeme und dergleichen entsprechende Aktivitätsdaten an das Prognosemodul liefern. Ist das vollautomatische Fahrerassistenzsystem aktiv, kann der Automatisierungsgrad ohnehin unmittelbar als 100 % über die Datenschnittstelle an das Sicherheitssystem weitergegeben werden.

Wie dargelegt wurde, kann das Sicherheitssystem vorteilhaft den Automatisierungsgradparameter zur Ermittlung wenigstens eines einen verbleibenden Aktionsspielraum beschreibenden Fahrsituationsparameters auswerten. In Abhängigkeit eines solchen Fahrsituationsparameters kann sich die Bewertung der aktuellen Fahrsituation verändern und/oder es können Eingriffsbedingungen angepasst werden, beispielsweise zu einem früheren Eingriff bei steigendem Automatisierungsgrad.

Besonders zweckmäßig ist es, wenn wenigstens ein Automatisierungsgradparameter als ein zeitlicher Verlauf, der den Automatisierungsgrad für einen Zeitraum in der Zukunft ausgehend von der aktuellen Situation beschreibt, von dem Fahrerassistenzsystem oder dem Prognosemodul ermittelt wird. Mithin kann die Aufteilung der Fahrzeugführung nicht nur für den aktuellen Status Quo eine nützliche Information sein, sondern auch für ein zukünftiges Zeitfenster, in dem sich die Verteilung der Fahrzeugführung ändern kann. Dabei ist darauf hinzuweisen, dass ein solcher erwarteter Verlauf von Automatisierungsgradparametern, mithin eine Art "Automatisierungssequenz", bereits im Vorfeld bekannt sein kann. Fährt das eigene Kraftfahrzeug beispielsweise zunächst vollautomatisch innerhalb des eigenen Fahrstreifens einem weiteren Kraftfahrzeug hinterher und wird es in Kürze eine Kreuzung erreichen, ist dem vollautomatischen Fahrerassistenzsystem bekannt, dass ihm zur Bewältigung der Kreuzungssituation die nötigen Fähigkeiten fehlen und dass der Fahrer wenigstens einen Teil der Fahrzeugführung übernehmen muss. Somit kann bekannt sein, dass beispielsweise in einem bestimmten Abstand zu der Kreuzung, deren Existenz beispielsweise aus Navigationsdaten und/oder Umfelddaten bekannt sein kann, der Fahrer einen Teil der Fahrzeugführung übernehmen wird, mithin der Automatisierungsgrad sinken wird. Dabei ist darauf hinzuweisen, dass die zu erwartende Intention, beispielsweise "an der Kreuzung rechts abbiegen", gleich bleibt. Damit kann aber ein Sicherheitssystem in der Analyse der Fahrsituation auch in der Vorausberechnung für die Zukunft immer auf die Information zurückgreifen, welcher Aktionsspielraum zur Verfügung steht, was die Funktion des Sicherheitssystems weiter verbessert.

Wie bereits angedeutet wurde, wird es grundsätzlich bevorzugt, wenn bei einem teilweise automatisierten Betrieb des Kraftfahrzeugs ein den teilweise automatisierten Anteil des Betriebs realisierendes Fahrzeugsystem Absichtsdaten zu in der Zukunft zu beabsichtigten Fahreingriffen als Eingangsdaten an das Prognosemodul liefert. Wie bereits bezüglich des Automatisierungsgradparameters beschrieben, sind in modernen Kraftfahrzeugen verschiedene Abstufungen des Automatisierungsgrades denkbar. Schaltet der Fahrer beispielsweise ein Längsführungssystem, beispielsweise ein ACC-System, und/oder ein Querführungssystem, beispielsweise ein LKS, zu, übernehmen diese Fahrzeugsysteme einen Teil der Fahrzeugführung, realisieren mithin den teilweise automatisierten Anteil des Betriebs des Kraftfahrzeugs. Deren beabsichtigte Regelungsmechanismen sind jedoch im Voraus bekannt und können dem Prognosemodul zweckmäßig als Eingangsdaten zur Verfügung gestellt werden. Diese Eingangsdaten werden gemeinsam mit anderen Eingangsdaten verwendet, um die Prognosedaten korrekt zu ermitteln, welche ja gegebenenfalls auch den Automatisierungsgradparameter enthalten können.

Dabei sei darauf hingewiesen, dass bei einem teilweise automatisierten Betrieb grundsätzlich automatisierte Anteile und fahrerseitige Anteile an der Fahrzeugführung zunächst getrennt betrachtet werden können, wobei Anteils-Prognosedaten für beide Anteile ermittelt werden, welche aber nicht zwangsläufig über die Datenschnittstelle mitgeteilt werden müssen, sondern beispielsweise als Grundlage für die gesamte Fahrzeugführung betreffende, endgültige, über die Schnittstelle zu übermittelnde Prognosedaten verwendet werden und/oder anderweitig genutzt werden können.

So sieht eine weitere bevorzugte Ausführungsform der vorliegenden Erfindung vor, dass ein Konflikterkennungsmodul verwendet wird, welches in einem teilweise automatisierten Betrieb des Kraftfahrzeugs bei einem Widerspruch zwischen den aus Prognosedaten für einen automatisierten Anteil der Fahrzeugführung und aus Prognosedaten für einen fahrerseitigen Anteil der Fahrzeugführung folgenden Fahrzeugführungsabsichten eine den Widerspruch beschreibende Widerspruchsinformation ermittelt und wenigstens einem weiteren Fahrzeugsystem, insbesondere wenigstens einem den automatisierten Anteil der Fahrzeugführung realisierenden Fahrzeugsystem, zur Konfliktbeseitigung übermittelt. Werden die Anteils-Prognosedaten als Teil der endgültigen Prognosedaten über die Datenschnittstelle übermittelt, kann das Konflikterkennungsmodul auch innerhalb des Sicherheitssystems realisiert werden. Bevorzugt ist es aber, es als eine eigene Einheit, ggf. gemeinsam mit dem Prognosemodul, vorzusehen, welches, wenn die Anteils-Prognosedaten in den endgültigen Prognosedaten enthalten sind, die Prognosedaten über dieselbe Datenschnittstelle, die auch das Sicherheitssystem nutzt, entgegennehmen kann. Insgesamt erlaubt es die Ausgestaltung mit einem Konflikterkennungsmodul, bei assistierter, teilautomatisierter Fahrt Konflikte zwischen Fahrerintention und Fahrzeugsystemintention frühzeitig detektieren und auflösen zu können. Plant beispielsweise ein Lane-Keeping-System, das Fahrzeug auf der aktuellen Fahrspur (dem aktuellen Fahrstreifen) zu halten, ergibt aber eine Analyse der Bedientätigkeit und der Fahrsituation als intendierte Fahrzeugführungsmaßnahme des Fahrers einen Spurwechsel, gegebenenfalls für einen Überholvorgang, wird ein Widerspruch festgestellt, da die Intentionen einander entgegenlaufen. Ein solcher Konflikt kann aufgelöst werden, beispielsweise durch Rückinformierung des Lane-Keeping-Systems, welches seine Eingriffe entsprechend anpasst, oder aber durch eine Ausgabe von einem entsprechenden Hinweis an den Fahrer, der sein Fahrverhalten anpassen oder auch das Lane-Keeping-System deaktivieren kann.

Vorzugsweise kann das Prognosemodul die Prognosedaten in Abhängigkeit von die Betätigung von Bedienelementen durch einen Fahrer beschreibenden Bedienelemtendaten und/oder Daten einer Blickrichtungserkennungseinrichtung und/oder Navigationsdaten eines Navigationssystems und/oder von insbesondere in einem Umfeldmodell gespeicherten Umfelddaten ermitteln. Verschiedenste Eingangsdaten sind also denkbar, die durch das Prognosemodul verarbeitet werden können. Beispielsweise können Betätigungen von Bedienelementen wie Pedalerie, Lenkrad, Fahrtrichtungsanzeiger und dergleichen berücksichtigt werden, wobei zusätzlich eine Blickrichtungserkennung, die Sollroute aus Navigationsdaten und Umfelddaten nützlich sind.

Wie bereits im Hinblick auf das Konflikterkennungsmodul angedeutet, ist es auch denkbar, dass die Prognosedaten über eine Instanz der Datenschnittstelle an wenigstens ein weiteres Fahrzeugsystem übertragen werden. Auch andere Fahrzeugsysteme, die solche Prognosedaten sinnvoll verarbeiteten können, können durch die Standardisierung des Datenformats und mittels der entsprechenden Datenschnittstelle die vom Fahrerassistenzsystem oder dem Prognosemodul gelieferten Prognosedaten einsetzen, wenn eine entsprechende Datenschnittstelle vorhanden ist. Beispielsweise kann in konkreter Ausgestaltung das weitere Fahrzeugsystem ein Anzeigesystem zur Anzeige eines zukünftigen Fahrverhaltens bei vollautomatischem Betrieb sein. Die standardisierte Datenschnittstelle kann mithin auch eingesetzt werden, um bei automatisierter Fahrt den Fahrer über entsprechende Anzeigeeinrichtungen, beispielsweise HMI-Komponenten, zu vermitteln, welches die nächsten Fahrzeugführungsmaßnahmen des vollautomatischen Fahrerassistenzsystems sind.

Neben dem Verfahren betrifft die vorliegende Erfindung auch ein Kraftfahrzeug, umfassend wenigstens ein Steuergerät, das zur Durchführung des erfindungsgemäßen Verfahrens ausgebildet ist. Sämtliche Ausführungen bezüglich des erfindungsgemäßen Verfahrens lassen sich analog auf das erfindungsgemäße Kraftfahrzeug übertragen, mit welchem mithin dieselben Vorteile erhalten werden können. Das Verfahren kann dabei von einem oder mehreren Steuergeräten ausgeführt werden, insbesondere auch von Steuergeräten, die anderen Fahrzeugsystemen zugeordnet sind. Jedenfalls umfasst das erfindungsgemäße Kraftfahrzeug ein Sicherheitssystem und ein vollautomatisches Fahrerassistenzsystem, wobei selbstverständlich auch weitere Fahrzeugsysteme vorgesehen sind, die beispielsweise über einen Fahrzeugbus, insbesondere einen CAN-Bus, miteinander kommunizieren können.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Figur zur Durchführung des erfindungsgemäßen Verfahrens,
- Fig. 2: den zeitlichen Verlauf eines Automatisierungsgrades, und
- Fig. 3: ein erfindungsgemäßes Kraftfahrzeug.

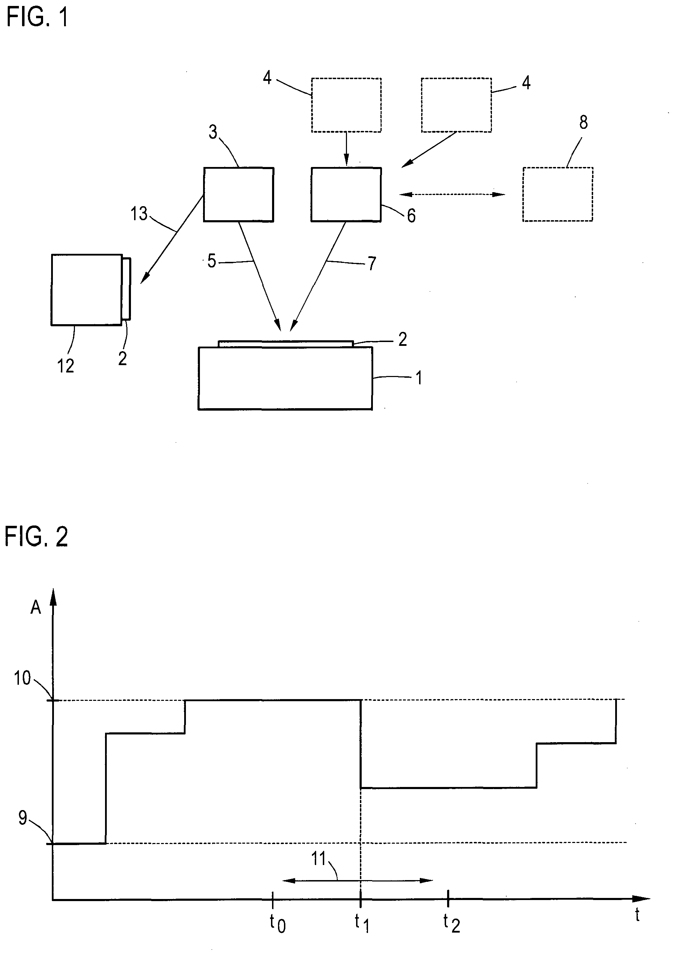

Das erfindungsgemäße Verfahren soll im Folgenden im Hinblick auf die in Fig. 1 gezeigte Struktur näher erläutert werden. Das Verfahren dient dazu, durch ein Sicherheitssystem 1 zu verarbeitende Prognosedaten außerhalb des Sicherheitssystems 1 zu ermitteln. Mithin ist das Sicherheitssystem 1 mit einer Datenschnittstelle 2 versehen, über die die Prognosedaten dem Sicherheitssystem 1 zugeführt werden können. Die Datenschnittstelle 2 ist standardisiert, das bedeutet insbesondere, dass die Prognosedaten in einem festgelegten Datenformat an das Sicherheitssystem 1 übertragen werden. Ein Vorteil dieser Herangehensweise ist, dass die Prognosedaten von mehreren Quellen innerhalb eines Kraftfahrzeugs stammen können, worauf im Folgenden noch näher eingegangen werden wird.

Das Sicherheitssystem 1 kann beispielsweise ein Notbremssystem oder ein Notausweichsystem sein, wobei im vorliegenden Ausführungsbeispiel ein Notbremssystem betrachtet wird. Dieses kann die Prognosedaten, welche zukünftige Fahrzeugführungsmaßnahmen des Kraftfahrzeugs beschreiben, gemeinsam mit weiteren Fahrsituationsdaten auswerten, beispielsweise, um eine Kollisionswahrscheinlichkeit oder allgemein eine Unfallwahrscheinlichkeit der aktuellen Fahrsituation zu bestimmen. Ist eine Eingriffsbedingung erfüllt, beispielsweise also ein Schwellwert überschritten, greift das Sicherheitssystem durch einen Fahreingriff ein, um einen Unfall zu vermeiden oder Unfallfolgen zu vermindern.

Dabei ist es nützlich, die Prognosedaten, die zukünftige Fahrzeugführungsmaßnahmen beschreiben, zur Verfügung zu haben, denn auf diese Weise kann eine Art "Bevormundung" des Fahrers vermieden werden, wenn dieser beispielsweise ohnehin ein Ausweichmanöver plant, wobei im Hinblick auf einen vollautomatischen Betrieb des Kraftfahrzeugs letztlich auch eine Überprüfung stattfinden kann, ob das zugehörige vollautomatische Fahrerassistenzsystem 3 die Gefahr bemerkt hat. Zusätzlich ist in den Prognosedaten im vorliegenden Ausführungsbeispiel auch wenigstens ein Automatisierungsgradparameter enthalten, der den aktuellen Automatisierungsgrad beschreibt, insbesondere für Umstände, in denen eine teilweise automatisierte Fahrzeugführung vorliegt, beispielsweise also weitere Fahrerassistenzsysteme wie ACC oder LKS aktiv sind. Solche weiteren Fahrerassistenzsysteme, die einen teilweise automatisierten Betrieb des Kraftfahrzeugs realisieren, sind in Fig. 1 als den teilweise automatisierten Betrieb realisierende Fahrzeugsysteme 4 angedeutet.

Wie dargelegt, ist im vorliegenden Ausführungsbeispiel ein vollautomatisches Fahrerassistenzsystem 3 vorgesehen, das bedeutet, der Betrieb des Kraftfahrzeugs kann vollkommen automatisch ohne Eingriffe des Fahrers erfolgen. Bei Betrieb des Fahrerassistenzsystems 3 ist eine Prognose einfach zu realisieren, denn das Fahrerassistenzsystem 3 kann die Prognosedaten aus seinen für einen vorausliegenden Zeitabschnitt geplanten Fahreingriffen problemlos selbst ermitteln, ebenso wie Automatisierungsgradparameter, die eine vollständige Automatisierung des Betriebs des Kraftfahrzeugs anzeigen. Das bedeutet, bei Betrieb des vollautomatisierten Fahrerassistenzsystems 3 werden die Prognosedaten dort ermittelt und gemäß dem Pfeil 5 über ein Bussystem des Kraftfahrzeugs, beispielsweise einem CAN-Bus, an die entsprechende Datenschnittstelle 2 des Sicherheitssystems 1 übertragen.

Eine andere Situation liegt vor, wenn ein manueller oder lediglich teilweise automatisierter Betrieb vorliegt. Um in diesem Fall Prognosedaten zu ermitteln, wird ein zum Sicherheitssystem externes Prognosemodul 6 verwendet, welches verschiedene Eingangsdaten auswertet, um die Prognosedaten zu bestimmen und gemäß Pfeil 7 an das Sicherheitssystem 1 zu übertragen. Die Eingangsdaten umfassen vorliegend die Betätigung von Bedienelementen, insbesondere die Pedalerie, das Lenkrad, Fahrtrichtungsanzeiger und dergleichen, durch einen Fahrer beschreibende Bedienelementedaten, Daten einer Blickrichtungserkennungseinrichtung, Navigationsdaten eines Navigationssystems und in einem Umfeldmodell gespeicherte Umfelddaten, die beispielsweise aus Sensordaten von Umfeldsensoren ermittelt werden können.

Weitere Eingangsdaten erhält das Prognosemodul 6 im teilweise automatisierten Betrieb von den aktiven Fahrzeugsystemen 4, die den automatisierten Anteil der Fahrzeugführung realisieren. Diese Eingangsdaten enthalten Absichtsdaten zu in der Zukunft beabsichtigten Fahreingriffen.

Dies ermöglicht es zum einen, den wenigstens einen Automatisierungsgradparameter zu bestimmen, zum anderen erlaubt es aber auch eine getrennte Betrachtung des automatisierten Anteils und des fahrerseitigen Anteils an der Fahrzeugführung. Insbesondere können Anteils-Prognosedaten für beide Anteile getrennt ermittelt werden, welche dann in einem optional vorgesehenen, mit dem Prognosemodul 6 kommunizierenden Konflikterkennungsmodul 8 auf einen Widerspruch ausgewertet werden können. Ein Widerspruch bedeutet, dass die aus den Prognosedaten für den automatisierten Anteil der Fahrzeugführung folgende Fahrzeugführungsabsicht im Widerspruch zu der aus den Prognosedaten für den fahrerseitigen Anteil der Fahrzeugführung folgenden Fahrzeugführungsabsicht stehen. Deutet beispielsweise für den fahrerseitigen Anteil alles darauf hin, dass ein Überholvorgang geplant ist und möchte das den automatisierten Anteil realisierende Fahrzeugsystem 4 die Spur möglichst halten, liegt ein Widerspruch vor. Aus diesem kann eine Widerspruchsinformation abgeleitet werden, die durch das Konflikterkennungsmodul 8 wenigstens einem weiteren Fahrzeugsystem, insbesondere dem entsprechenden Fahrzeugsystem 4, zur Verfügung gestellt wird, um eine Konfliktbeseitigung zu ermöglichen.

Das Konflikterkennungsmodul 8 kann als eigenes Fahrzeugsystem und/oder in einem eigenen Steuergerät realisiert werden. Im vorliegenden Fall nutzt es auch eine Instanz der standardisierten Datenschnittstelle 2, um die Prognosedaten zu erhalten, welche mithin auch die Anteils-Prognosedaten für den automatisierten Anteil und den fahrerseitigen Anteil enthalten, was nicht zwangsläufig vorgesehen sein muss, beispielsweise dann, wenn das Konflikterkennungsmodul 8 in das Prognosemodul 6 integriert ist oder anderweitig mit diesen kommunizieren kann.

Wie bereits erwähnt wurde, enthalten die Prognosedaten auch wenigstens einen für das Sicherheitssystem 1 besonders nützlichen Automatisierungsgradparameter, der den Automatisierungsgrad beschreibt und zur Ermittlung wenigstens eines einen verbleibenden Aktionsspielraum beschreibenden Fahrsituationsparameters in dem Sicherheitssystem 1 verwendet wird. Denn die Fahrzeugsysteme 3, 4 können in ihren Möglichkeiten eingeschränkter sein als ein Fahrer, was bei der Beurteilung der Fahrsituation durch das Sicherheitssystem 1 eine wichtige Information ist. Vorliegend wird der Automatisierungsgrad sogar durch einen zeitlichen Verlauf beschrieben, und zwar konkret für einen bestimmten Zeitraum in der Zukunft ausgehend von der aktuellen Situation. Denn es existieren viele Fahrsituationen, in denen bereits abgeschätzt werden kann, dass sich in der Zukunft der Automatisierungsgrad ändern wird, beispielsweise dann, wenn mit aktiviertem vollautomatisierten Fahrerassistenzsystem 3 auf eine Kreuzung zu gefahren wird, die mit den Fähigkeiten des Fahrerassistenzsystems 3 nicht zu bewältigen ist, so dass die Fahrzeugführung teilweise wieder an den Fahrer abgegeben werden muss. Unter Ausnutzung eines derart bekannten zeitlichen Verlaufs ist es für das Sicherheitssystem 1 noch genauer möglich, den verbliebenen Aktionsspielraum über die Zeit zu betrachten.

Ein beispielhafter Verlauf des Automatisierungsgrades A gegen die Zeit t ist in Fig. 2 dargestellt, wobei der untere Grenzwert 9 den vollständig manuellen Betrieb des Kraftfahrzeugs beschreibt, der obere Grenzwert 10 den vollautomatisierten Betrieb des Kraftfahrzeugs. Ersichtlich treten im zeitlichen Verlauf einige Änderungen auf. Ist zum Zeitpunkt t₀ die bevorstehende Kreuzung erfasst, kann abgeschätzt werden, dass zu einem Zeitpunkt t₁ der Automatisierungsgrad erniedrigt werden wird, da der Fahrer die Kreuzung selbst durchfahren muss. Dies ist auch in den Prognosedaten enthalten und kann durch das Sicherheitssystem 1 berücksichtigt werden. Allgemein kann es beispielsweise denkbar sein, dass der Verlauf des Automatisierungsgrades für einen Zeitraum 11 vorhersagbar ist.

Nachdem die standardisierte Datenschnittstelle 2 existiert, die entsprechend auch durch andere Fahrzeugsysteme genutzt werden kann, ist es auch möglich, weitere Fahrzeugsysteme mit den Prognosedaten zu versorgen, beispielsweise im Fall des vollautomatisierten Betriebs ein Anzeigesystem 12, vgl. auch Pfeil 13. Über dieses Anzeigesystem 12 kann dem Fahrer vermittelt werden, welche Fahrzeugführungsmaßnahmen das vollautomatische Fahrerassistenzsystem zukünftig plant. Beispielsweise können diese auf einem Head-Up-Display kontaktanalog eingeblendet werden.

Im vorliegenden Ausführungsbeispiel enthalten die Prognosedaten zukünftige, in Trajektorienabschnitte aufgeteilte Trajektorien des Kraftfahrzeugs, denen jeweils ein Wahrscheinlichkeitswert für den Eintritt des Trajektorienabschnitts zugeordnet ist. Strukturell kann das in der Beschreibungseinleitung gegebene Beispiel wiederum herangezogen werden, wonach zunächst zu 90 % geradeaus der Straße gefolgt wird, wobei nach 100 m zu 60 % an der Kreuzung rechts abgebogen wird, zu 20 % links und zu 20 % weiter geradeaus gefahren wird.

Es wird darauf hingewiesen, dass in der prinzipiellen Skizze der Fig. 1 weitere Eingangsdaten der verschiedenen Systeme und Funktionen der Übersichtlichkeit halber nicht dargestellt sind. Üblicherweise werden von den verschiedenen dargestellten Systemen für ihre Berechnungen auch beispielsweise Egodaten, die den Zustand des Kraftfahrzeugs beschreiben, und Umfelddaten, beispielsweise wie beschrieben in einem Umfeldmodell, betrachtet. Dies alles ist im Stand der Technik jedoch weitgehend bekannt und soll hier nicht näher dargelegt werden.

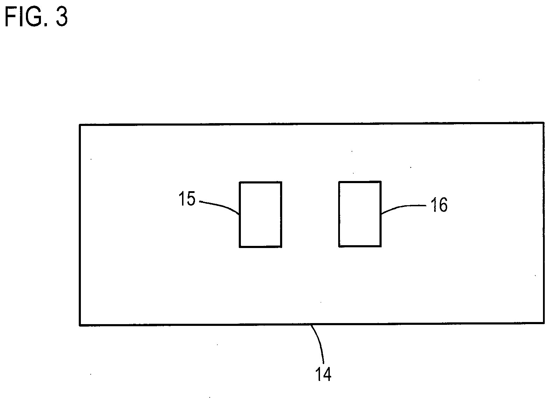

Fig. 3 zeigt schließlich eine stark vereinfachte Prinzipskizze eines erfindungsgemäßen Kraftfahrzeugs 14, in dem das vollautomatische Fahrerassistenzsystem 3, das Sicherheitssystem 1, die Fahrzeugsysteme 4, das Prognosemodul 6, das Anzeigesystem 12 und weitere Fahrzeugsysteme realisiert sind, die der Übersichtlichkeit halber nicht dargestellt sind.

Die Funktionen dieser Fahrzeugsysteme werden durch jeweils zugeordnete Steuergeräte realisiert, wobei in Fig. 3 beispielshalber zwei Steuergeräte 15, 16 gezeigt sind, die gemeinsam (oder in Zusammenspiel mit weiteren Steuergeräten) das erfindungsgemäße Verfahren ausführen können. Dabei wird insbesondere darauf hingewiesen, dass das Prognosemodul 6 bevorzugt in einem nicht dem Sicherheitssystem 1 zugeordneten Steuergerät 15, 16 realisiert ist.

## Patentansprüche

1. Verfahren zum Betrieb eines Kraftfahrzeugs (14) mit einem Sicherheitssystem (1) und einem zum vollständig automatischen Betrieb des Kraftfahrzeugs (14) ausgebildeten vollautomatischen Fahrerassistenzsystem (3), wobei das Sicherheitssystem (1) zu einem autonomen Fahreingriff bei Erfüllung wenigstens einer die aktuelle Fahrsituation, beschrieben durch Fahrsituationsdaten, die Prognosedaten über das zukünftige Fahrzeugführungsmaßnahmen des Kraftfahrzeugs (14) enthalten, auswertenden Eingriffsbedingung ausgebildet ist,
**dadurch gekennzeichnet,**
**dass** die Prognosedaten bei vollautomatischem Betrieb durch das Fahrerassistenzsystem (3) und bei wenigstens teilweise durch einen Fahrer geführtem Betrieb durch ein von dem Sicherheitssystem (1) unabhängiges Prognosemodul (6) ermittelt und dem Sicherheitssystem (1) über eine einzige, durch das Fahrerassistenzsystem (3) und das Prognosemodul (6) genutzte Datenschnittstelle (2) übermittelt werden.

2. Verfahren nach Anspruch 1,
**dadurch gekennzeichnet,**
**dass** das Fahrerassistenzsystem (3) die Prognosedaten aus seinen für einen vorausliegenden Zeitabschnitt geplanten Fahreingriffen ermittelt.

3. Verfahren nach Anspruch 1 oder 2,
**dadurch gekennzeichnet,**
**dass** die Prognosedaten wenigstens eine zukünftige, wenigstens einen Trajektorienabschnitt umfassende Trajektorie des Kraftfahrzeugs (14) und/oder wenigstens einen zukünftigen Fahreingriff beschreiben, wobei jedem Trajektorienabschnitt bzw. jedem Fahreingriff ein Wahrscheinlichkeitswert für den Eintritt des Trajektorienabschnitts bzw. des Fahreingriffs zugeordnet ist.

4. Verfahren nach einem der vorangehenden Ansprüche,
**dadurch gekennzeichnet,**
**dass** wenigstens ein den Anteil eines menschlichen Fahrers an der Fahrzeugführung beschreibender Automatisierungsgradparameter als Teil der Prognosedaten ermittelt wird.

5. Verfahren nach Anspruch 4,
**dadurch gekennzeichnet,**
**dass** das Sicherheitssystem (1) den Automatisierungsgradparameter zur Ermittlung wenigstens eines einen verbleibenden Aktionsspielraum beschreibenden Fahrsituationsparameters auswertet.

6. Verfahren nach Anspruch 4 oder 5,
**dadurch gekennzeichnet,**
**dass** wenigstens ein Automatisierungsgradparameter als ein zeitlicher Verlauf, der den Automatisierungsgrad für einen Zeitraum in der Zukunft ausgehend von der aktuellen Situation beschreibt, von dem Fahrerassistenzsystem (3) oder dem Prognosemodul (6) ermittelt wird.

7. Verfahren nach einem der vorangehenden Ansprüche,
**dadurch gekennzeichnet,**
**dass** bei einem teilweise automatisierten Betrieb des Kraftfahrzeugs (14) ein den teilweise automatisierten Anteil des Betriebs realisierendes Fahrzeugsystem (4) Absichtsdaten zu in der Zukunft beabsichtigten Fahreingriffen als Eingangsdaten an das Prognosemodul liefert.

8. Verfahren nach einem der vorangehenden Ansprüche,
**dadurch gekennzeichnet,**
**dass** ein Konflikterkennungsmodul (8) verwendet wird, welches in einem teilweise automatisiertem Betrieb des Kraftfahrzeugs (14) bei einem Widerspruch zwischen den aus Prognosedaten für einen automatisierten Anteil der Fahrzeugführung und aus Prognosedaten für einen fahrerseitigen Anteil der Fahrzeugführung folgenden Fahrzeugführungsabsichten eine den Widerspruch beschreibende Widerspruchsinformation ermittelt und wenigstens einem weiteren Fahrzeugsystem, insbesondere wenigstens einem den automatisierten Anteil der Fahrzeugführung realisierenden Fahrzeugsystem (4), zur Konfliktbeseitigung übermittelt.

9. Verfahren nach einem der vorangehenden Ansprüche,
**dadurch gekennzeichnet,**
**dass** das Prognosemodul die Prognosedaten in Abhängigkeit von die Betätigung von Bedienelementen durch einen Fahrer beschreibenden Bedienelementedaten und/oder Daten einer Blickrichtungserkennungseinrichtung und/oder Navigationsdaten eines Navigationssystems und/oder von insbesondere in einem Umfeldmodell gespeicherten Umfelddaten ermittelt.

10. Verfahren nach einem der vorangehenden Ansprüche,
**dadurch gekennzeichnet,**
**dass** die Prognosedaten über eine weitere Instanz der Datenschnittstelle (2) an wenigstens ein weiteres Fahrzeugsystem übertragen werden.

11. Verfahren nach Anspruch 10,
**dadurch gekennzeichnet,**
**dass** das weitere Fahrzeugsystem ein Anzeigesystem (12) zur Anzeige eines zukünftigen Fahrverhaltens bei vollautomatischem Betrieb ist.

12. Kraftfahrzeug (14), umfassend wenigstens ein Steuergerät (15, 16), das zur Durchführung eines Verfahrens nach einem der vorangehenden Ansprüche ausgebildet ist.

## Claims

1. Method for operating a motor vehicle (14) with a safety system (1) and a fully automatic driver assistance system (3) designed for fully-automatic operation of the motor vehicle (14), wherein the safety system (1) is designed to perform an autonomous driver intervention when at least one intervention condition evaluating the current driving situation, described by driving situation data which contain prediction data about future vehicle control measures of the motor vehicle (14), is met,
**characterized in that**
in the case of fully automatic operation by the driver assistance system (3) and in the case of at least partial operation controlled by a driver the prediction data are determined by means of a prediction module (6) which is independent of the safety system (1) and are transmitted to the safety system (1) via a single data interface (2) which is used by the driver assistance system (3) and the prediction module (6).

2. Method according to claim 1,
**characterized in that**
the driver assistance system (3) determines the prediction data from its driver interventions that are planned for a future time interval.

3. Method according to claim 1 or 2,
**characterized in that**
the prediction data describe at least one future trajectory of the motor vehicle (14) comprising at least one trajectory section and/or at least one future driver intervention, wherein a probability value for the occurrence of the trajectory section or the driver intervention is associated with each trajectory section or each driver intervention.

4. Method according to any of the preceding claims,
**characterized in that**
at least one level of automation parameter describing the level of vehicle guidance by a human driver is determined as part of the prediction data.

5. Method according to claim 4,
**characterized in that**
the safety system (1) evaluates the level of automation parameter for detecting at least one driving situation parameter describing the remaining scope for action.

6. Method according to claim 4 or 5,
**characterized in that**
at least one level of automation parameter describing the level of automation for a future time interval based on the current situation is determined as a plot over time by the driver assistance system (3) or the prediction module (6).

7. Method according to any of the preceding claims,
**characterized in that**
in the case of a partial automatic operation of the motor vehicle (14) a motor vehicle system (4) implementing the level of partial automatic operation transmits intention data on driver interventions intended in the future as input data to the prediction module.

8. Method according to any of the preceding claims,
**characterized in that**
a conflict detection module (8) is used which, in the case of partial automatic operation of the motor vehicle (14), determines in the event of a contradiction in vehicle guidance intentions following from prediction data for a level of automated vehicle guidance and prediction data for a level of vehicle guidance by a driver contradiction information describing the contradiction and transmits it to at least one further vehicle system, in particular a vehicle system (4) implementing the level of automated vehicle guidance, to remove the conflict.

9. Method according to any of the preceding claims,
**characterized in that**
the prediction module determines the prediction data depending on control element data describing the operation of control elements by a driver and/or data of a viewing direction detection device and/or navigation data of a navigation system and/or in particular environment data stored in an environmental model.

10. Method according to any of the preceding claims,
**characterized in that**
the prediction data are transmitted via a further instance of the data interface (2) to at least one further vehicle system.

11. Method according to claim 10,
**characterized in that**
the further vehicle system is a display system (12) for displaying a future driving behaviour in fully automatic operation.

12. Motor vehicle (14), comprising at least one control device (15, 16) configured to carry out a method according to any of the preceding claims.

## Revendications

1. Procédé pour faire fonctionner un véhicule automobile (14) avec un système de sécurité (1) et avec un système d'assistance au conducteur (3) complètement automatique conçu en vue du fonctionnement complètement automatique du véhicule automobile (14), dans lequel le système de sécurité (1) est conçu en vue d'une intervention de conduite autonome lorsque est satisfaite au moins une condition d'intervention évaluant la situation de conduite actuelle, décrite par des données de situation de conduite qui contiennent des données de pronostic concernant les futures mesures de guidage de véhicule du véhicule automobile (14),
**caractérisé en ce que**
les données de pronostic sont déterminées, dans le cas d'un fonctionnement complètement automatique, par le système d'assistance au conducteur (3) et, dans le cas d'un fonctionnement au moins partiellement guidé par un conducteur, par un module de pronostic (6) indépendant du système de sécurité (1) et elles sont transmises au système de sécurité (1) par l'intermédiaire d'une unique interface de données (2) utilisée par le système d'assistance au conducteur (3) et par le module de pronostic (6).

2. Procédé selon la revendication 1,
**caractérisé en ce que**
le système d'assistance au conducteur (3) détermine les données de pronostic à partir de ses interventions de conduite planifiées pour un intervalle de temps suivant.

3. Procédé selon la revendication 1 ou 2,
**caractérisé en ce que**
les données de pronostic décrivent au moins une future trajectoire, comprenant au moins un tronçon de trajectoire, du véhicule automobile (14) et/ou au moins une future intervention de conduite, une valeur de probabilité pour l'arrivée du tronçon de trajectoire ou de l'intervention de conduite étant associée à chaque tronçon de trajectoire ou à chaque intervention de conduite.

4. Procédé selon l'une des revendications précédentes,
**caractérisé en ce qu'**
au moins un paramètre de degré d'automatisation décrivant la part d'un conducteur humain dans le guidage de véhicule est déterminé comme partie des données de pronostic.

5. Procédé selon la revendication 4,
**caractérisé en ce que**
le système de sécurité (1) évalue le paramètre de degré d'automatisation afin de déterminer au moins un paramètre de situation de conduite décrivant une liberté d'action restante.

6. Procédé selon la revendication 4 ou 5,
**caractérisé en ce qu'**
au moins un paramètre de degré d'automatisation est déterminé par le système d'assistance au conducteur (3) ou par le module de pronostic (6) sous la forme d'une courbe temporelle qui décrit le degré d'automatisation pour un intervalle de temps dans le futur à partir de la situation actuelle.

7. Procédé selon l'une des revendications précédentes,
**caractérisé en ce que**,
dans le cas d'un fonctionnement partiellement automatisé du véhicule automobile (14), un système de véhicule (4) réalisant la part partiellement automatisée du fonctionnement fournit comme données d'entrée au module de pronostic des données envisagées pour des interventions de conduite envisagées dans le futur.

8. Procédé selon l'une des revendications précédentes,
**caractérisé en ce qu'**
on utilise un module de détection de conflit (8) qui détermine, lors d'un fonctionnement partiellement automatisé du véhicule automobile (14), en présence d'une contradiction entre des intentions de guidage de véhicule déduites de données de pronostic pour une part automatisée du guidage de véhicule et celles déduites de données de pronostic pour une part côté conducteur du guidage de véhicule, une information de contradiction décrivant la contradiction et qui la transmet à au moins un autre système de véhicule, en particulier à au moins un système de véhicule (4) réalisant la part automatisée du guidage de véhicule, en vue d'une résolution de conflit.

9. Procédé selon l'une des revendications précédentes,
**caractérisé en ce que**
le module de pronostic détermine les données de pronostic en fonction de données d'éléments de commande décrivant l'actionnement d'éléments de commande par un conducteur et/ou de données d'un dispositif de détection de direction du regard et/ou de données de navigation d'un système de navigation et/ou de données d'environnement mémorisées en particulier dans un modèle d'environnement.

10. Procédé selon l'une des revendications précédentes,
**caractérisé en ce que**
les données de pronostic sont transmises à au moins un autre système de véhicule par l'intermédiaire d'une autre instance de l'interface de données (2).

11. Procédé selon la revendication 10,
**caractérisé en ce que**
l'autre système de véhicule est un système d'affichage (12) servant à afficher un futur comportement de conduite lors d'un fonctionnement complètement automatique.

12. Véhicule automobile (14), comprenant au moins un appareil de commande (15, 16) qui est conçu afin de mettre en oeuvre un procédé selon une des revendications précédentes.
